(19) Europäisches Patentamt

European Patent Office

Office européen des brevets

(11) Veröffentlichungsnummer: **0 249 192**
**A2**

(12) # EUROPÄISCHE PATENTANMELDUNG

(21) Anmeldenummer: 87108312.7

(51) Int. Cl.4: **B41J 29/02** , F16B 9/02

(22) Anmeldetag: 09.06.87

(30) Priorität: **11.06.86 DE 3619644**

(43) Veröffentlichungstag der Anmeldung:
**16.12.87 Patentblatt 87/51**

(84) Benannte Vertragsstaaten:
**CH DE ES FR GB IT LI NL SE**

(71) Anmelder: **Siemens Aktiengesellschaft Berlin und München**
**Wittelsbacherplatz 2**
**D-8000 München 2(DE)**

(72) Erfinder: **Brust, Gerhard, Dipl.-Ing.**
**Wriezener Strasse 25**
**D-1000 Berlin 65(DE)**
Erfinder: **Rump, Werner, Dipl.-Ing.**
**Rheingaustrasse 25**
**D-1000 Berlin 41(DE)**
Erfinder: **Vorbach, Günther, Dipl.-Ing.**
**Sudetenstrasse 5**
**D-8255 Schwindegg(DE)**

(54) **Steckbare Gestängehalterung zum Befestigen eines Gestänges zwischen Stützplatinen.**

(57) Zum lösbaren Befestigen von Gestängen in einseitig offenen Lageröffnungen von Stützplatinen ist ein einstückig aus Kunststoff ausgebildetes Halteelement vorgesehen. Das Halteelement weist einen Führungskörper mit an seiner Unterseite ausgebildeten Lagerschale für das Gestänge auf, sowie seitlich am Führungskörper Führungen zur spielfreien Führung des Halteelementes in den Lageröffnungen und federnde Rasthaken zum Verrasten in den Lageröffnungen. Mit dem Führungskörper verbunden und in Richtung des Gestänges verlaufend ist ein Stirnhaken angeordnet der im verrasteten Zustand des Halteelementes mit seinem freien Ende das Gestänge übergreift.

FIG 9

EP 0 249 192 A2

## Steckbare Gestängehalterung zum Befestigen eines Gestänges zwischen Stützplatinen.

Die Erfindung betrifft eine Vorrichtung gemäß dem Oberbegriff des Patentanspruches 1.

Eine Vorrichtung der eingangs genannten Art ist aus der DE-PS 32 10 024 bekannt. Dabei handelt es sich um eine Vorrichtung zur Befestigung eines auf einen Datendrucker oder dergleichen aufsetzbaren Formularvorschubes. Die Vorrichtung weist Stützplatinen mit einseitig offenen Lageröffnungen zur Aufnahme eines Gestänges auf, wobei zur Sicherung des Gestänges ein Sicherungshebel verwendet wird, der in einer ersten Endlage das Einfügen des Gestänges in die Stützplatine ermöglicht und in einer zweiten Endlage das Gestänge sichert.

Ein Problem bildet bei einer derartigen Halterung die elektrische Isolation des Gestänges von den Stützplatinen. Werden z.B. derartige Gestänge als Führungsstangen für Druckköpfe oder ähnliches in Druckeinrichtungen verwendet, so muß aus Gründen der elektromagnetischen Verträglichkeit eine gute elektrische Verbindung zwischen sämtlichen Metallteilen am Drucker bestehen.

Aufgabe der Erfindung ist es, eine einfach herstellbare einstückige Vorrichtung zum lösbaren Befestigen von Gestängen in Stützplatinen bereitzustellen, die es ermöglicht, das Gestänge in Stützplatinen ohne Werkzeug und ohne zusätzliche Vorrichtung an den Stützplatinen senk recht zur Achsrichtung des Gestänges sicher zu montieren und bei der eine gute elektrische Verbindung zwischen den Gestängen und Stützplatinen gewährleistet ist.

Diese Aufgabe wird bei einer Vorrichtung der eingangs genannten Art gemäß dem kennzeichnenden Teil des ersten Patentanspruches gelöst.

Weitere vorteilhafte Ausführungsformen der Erfindung sind in den Unteransprüchen gekennzeichnet.

Bei der Erfindung wird in vorteilhafter Weise zur Halterung eines Gestänges z.B. den Führungsstangen eines Druckers, das Gestänge zunächst in die halbschaligen Lageröffnungen eingelegt. Damit ist ein guter elektrischer Kontakt zwischen den Stützplatinen und dem Gestänge gewährleistet. Nach Einschieben von zwei identisch ausgebildeten Halteelementen in die Lageröffnungen sichern die Halteelemente über ihre Lagerschalen und den ausgeformten elastischen Stirnhaken das Gestänge.

Die Montage des Gestänges kann dabei in einer Bewegungsrichtung erfolgen und ist auch maschinell durchführbar. Das Gestänge muß lediglich auf eine grobtolerierte Länge zugeschnitten sein und eine zusätzliche weitere mechanische Bearbeitung z.B. die Einfügung von Einstichen oder das Entfernen des Abstechpimpels ist nicht notwendig.

Eine Demontage ist in einfacher Weise durch Zusammendrücken der Rasthaken über an den Rasthaken ausgebildete Greifzapfen möglich. Die gesamte Vorrichtung ist einfach aufgebaut und ist an beiden Seiten des zu lagernden Gestänges ohne Änderung verwendbar.

Trotz der Ausbildung als Kunststoffspritzteil ergibt sich eine präzise Lagerung des Gestänges ohne Einschränkung der Handbarkeit.

Eine Ausführungsform der Erfindung ist in den Zeichnungen dargestellt und wird im folgenden beispielsweise näher beschrieben. Es zeigen

Fig. 1 eine schematische Darstellung des Halteelementes von oben

Fig. 2 eine schematische Darstellung des Halteelementes von hinten

Fig. 3 eine schematische Darstellung des Halteelementes von der Seite

Fig. 4 eine schematische Darstellung des Halteelementes von vorn

Fig. 5 eine schematische Darstellung des Halteelementes von unten

Fig. 6 eine schematische Darstellung der Montage des Gestänges mit Hilfe des Halteelementes

Fig. 7 Lageröffnung der Stützplatinen

Fig. 8 eine schematische Darstellung des montierten Gestänges in Draufsicht und

Fig. 9 eine schematische Darstellung des montierten Gestänges in Seitenansicht.

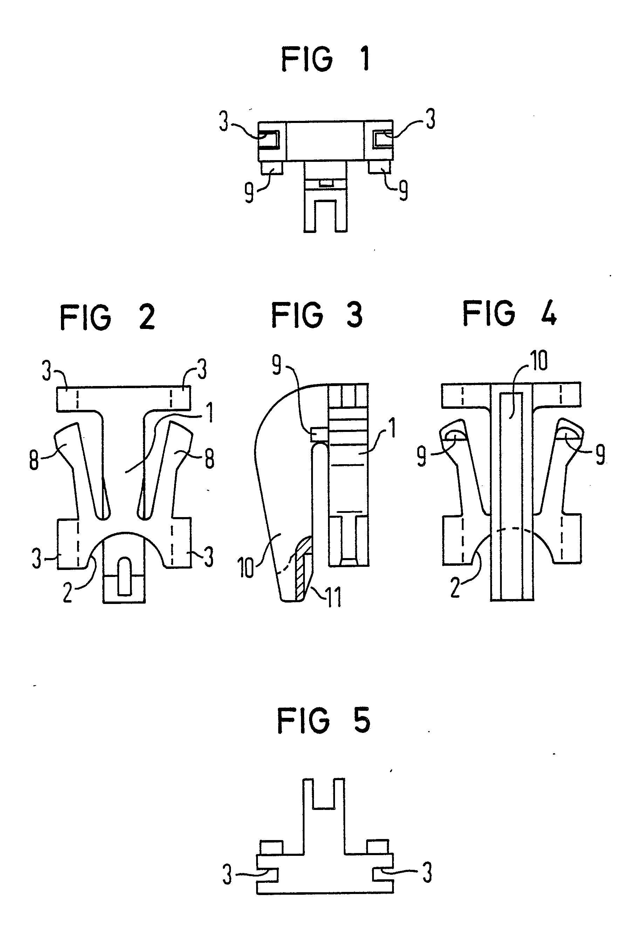

Das in den Fig. 1 bis 5 dargestellte aus Kunststoffspritzguß hergestellte Halteelement besteht aus einem Führungskörper 1 mit einer an seiner Unterkante ausgebildeten Lagerschale 2. Seitlich an dem Führungskörper sind vier Führungen 3 ausgebildet, die mit Montageausschnitten 4 von ein Gestänge 6 aufnehmenden Seitenplatinen 7 zusammenarbeiten. Weiterhin weist das Halteelement federnde Rast haken 8 auf, an denen Greifzapfen 9 ausgebildet sind. Senkrecht zu der durch die Führungen 3 gebildeten Ebene und damit in Richtung des Gestänges 6 ist an den Führungskörpern ein Stirnhaken 10 ausgebildet der an seiner mit dem Gestänge 6 zusammenwirkenden Ende eine Auflaufschräge 11 aufweist, sowie eine Ausnehmung 12 zur Aufnahme eines an dem Gestänge eventuell vorstehenden Abstechpimpels 13.

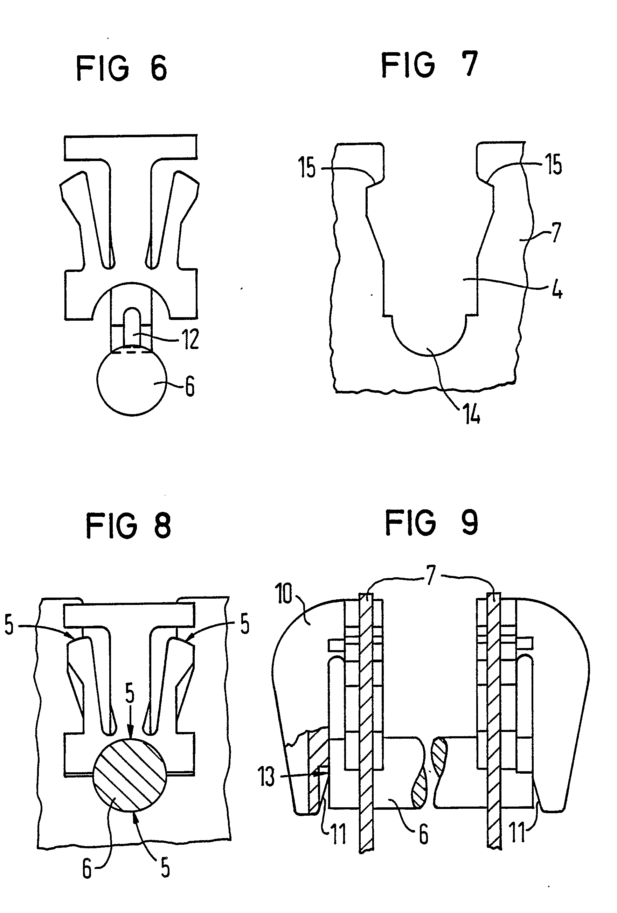

Montiert wird die gesamte Vorrichtung die in diesem Fall aus dem Druckerbock einer Zeilendruckeinrichtung besteht entsprechend der Darstellung der Fig. 6 und 7 wie folgt. Zunächst wird das Gestänge 6 in Halbschalen 14 des Montageausschnittes 4 der Seitenplatinen so eingelegt, daß die überstehenden Gestängeenden beidseitig etwa gleichlang sind. Die Kunststoffhalteelemente werden in die Montageausschnitte 4 der Seitenplatinen 7 eingesteckt und mit Hilfe der Rasthaken 8 verrastet. Die Rasthaken 8 verspreizen sich dabei entsprechend der Darstellung der Fig. 8 an Kanten 15 der Montageausschnitte 4. Die Auflaufschräge 11 an den Stirnhaken 10 gewährleistet, daß kleine Ungenauigkeiten der Gestängevormontage, wie Längentoleranzen ausgeglichen werden. Eine Ausnehmung 12 in Form einer Nut verhindert Störungen des Montageablaufs durch eventuell an dem Gestänge vorhandene Abstechpimpel 13. Nach dem Verrasten ergeben sich die aus der Fig. 8 ersichtlichen Anlagestellen 5.

Zur Demontage werden die beiden Greifzapfen 9 der Rasthaken 8 gegeneinandergedrückt und das Halteelement aus den Montageausschnitten 4 gezogen.

## Ansprüche

1. Vorrichtung zum lösbaren Befestigen von Gestängen in einseitig offenen Lageröffnungen aufweisenden Stützplatinen, insbesondere für achsgelagerte Baugruppen in Druckeinrichtungen mit einem in den Lageröffnungen verrastbaren Halteelement,
**dadurch gekennzeichnet,**
daß das Halteelement einen Führungskörper (1) mit an seiner Unterkante ausgebildeten Lagerschale (2) für das Gestänge (6) aufweist, sowie seitlich am Führungskörper (1) Führungen (3) zur spielfreien Führung des Halteelementes in den Lageröffnungen (4) und federnde Rasthaken (8) zum Verrasten in den Lageröffnungen (4), und daß mit dem Führungskörper (1) verbunden und senkrecht zu der durch die Führungen (3) gebildeten Ebene ein elastischer Stirnhaken (10) mit Auflaufschräge (11) angeordnet ist der im verrasteten Zustand des Halteelementes mit seinem freien Ende das Gestänge 6 übergreift.

2. Vorrichtung nach Anspruch 1,
**dadurch gekennzeichnet,**
daß an den Rasthaken (8) Greifzapfen (9) zum Lösen der Rasthaken (8) angeordnet sind.

3. Vorrichtung nach einem der Ansprüche 1 oder 2,
**dadurch gekennzeichnet,**

daß der Stirnhaken an seinem freien Ende Ausnehmungen (12) zur Aufnahme eines eventuellen Abstechpimpels (13) an dem Gestänge (6) aufweist.

4. Vorrichtung nach einem der Ansprüche 1 bis 3,
**dadurch gekennzeichnet,**
daß das Halteelement einstückig aus Kunststoff ausgebildet ist.

0 249 192

# FIG 1

# FIG 2

# FIG 3

# FIG 4

# FIG 5

## FIG 6

## FIG 7

## FIG 8

## FIG 9